(19) Europäisches Patentamt / European Patent Office / Office européen des brevets

(11) **EP 4 260 769 A1**

(12) **DEMANDE DE BREVET EUROPEEN**

(43) Date de publication:
**18.10.2023   Bulletin 2023/42**

(21) Numéro de dépôt: **23166374.1**

(22) Date de dépôt: **03.04.2023**

(51) Classification Internationale des Brevets (IPC):
***A47J 36/32*** *(2006.01)*

(52) Classification Coopérative des Brevets (CPC):
**A47J 36/32**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité:   **13.04.2022   FR 2203394**

(71) Demandeur: **SEB S.A.**
**69130 Ecully (FR)**

(72) Inventeur: **FORNECKER, Florent**
**69134 Ecully Cedex (FR)**

(74) Mandataire: **Germain Maureau**
**12, rue Boileau**
**69006 Lyon (FR)**

(54) **PROCÉDÉ DE CUISSON SUR UN APPAREIL PRÉSENTANT UN MODE DE CUISSON UTILISANT UNE SEULE PLAQUE DE CUISSON**

(57)   Procédé de cuisson d'un aliment (3) pour un appareil de cuisson (1) présentant un mode de cuisson utilisant une seule plaque de cuisson (2), le procédé comprenant :
- Une étape de caractérisation dans laquelle un type (T) de l'aliment à cuire (3) est déterminé;
- Une étape de dimensionnement dans laquelle une épaisseur (E) de l'aliment à cuire (3) est déterminée ;
caractérisé en ce que le procédé comprend une étape de détermination dans laquelle un moment de retournement pour obtenir au moins un niveau de cuisson parmi une pluralité de niveaux de cuisson consécutifs est déterminé au moyen d'un algorithme de cuisson prédéterminé recevant en entrée au moins le type (T), et l'épaisseur (E) de l'aliment à cuire, et en ce que le moment de retournement pour obtenir l'au moins un niveau de cuisson est indiqué à un utilisateur de l'appareil de cuisson (1).

[Fig. 1]

**EP 4 260 769 A1**

**Description**

L'invention concerne le domaine des appareils de cuisson électriques présentant un mode de cuisson utilisant une seule plaque de cuisson et plus particulièrement un procédé de détermination d'un moment de retournement d'un aliment à cuire par l'appareil de cuisson, ainsi qu'un appareil de cuisson pour la mise en oeuvre d'un tel procédé.

Un aliment désigne une substance comestible qui est notamment caractérisée par son type. Le type de l'aliment regroupe en particulier sa constitution et sa préparation pour l'utilisateur, comme par exemple une entrecôte de boeuf, un steak de boeuf, une saucisse.

L'aliment est également caractérisé par une géométrie. Plus précisément, la géométrie d'un aliment correspond à sa forme, et peut se caractériser par ses dimensions notamment : longueur, largeur, épaisseur, superficie ou diamètre.

L'aliment peut aussi être caractérisé par son état initial qui peut être frais ou surgelé.

L'aliment peut également être cuit à différents niveaux de cuisson, c'est-à-dire présenter différent états de cuisson à coeur. Dans la présente description, la cuisson consiste en un chauffage actif de l'aliment pendant une durée de cuisson déterminée. Le niveau de cuisson, par exemple pour la viande rouge, va de peu cuit, c'est-à-dire saignant, à bien cuit en passant par une cuisson à point.

Une cuisson d'un aliment sur un appareil de cuisson présentant un mode de cuisson utilisant une seule plaque de cuisson, tel qu'un barbecue électrique ou une plancha, ou encore un grill viande à deux plaques présentant un mode de cuisson barbecue, nécessite une mise en oeuvre de plusieurs étapes, comme : préchauffer la plaque de cuisson à une température déterminée de préchauffage, déposer l'aliment sur la plaque de cuisson de sorte à mettre en contact une première face de l'aliment avec la plaque de cuisson, attendre la cuisson de la première face avant de retourner l'aliment de sorte à mettre une deuxième face de l'aliment en contact avec la plaque de cuisson, attendre la cuisson de la deuxième face de l'aliment et enfin retirer l'aliment cuit pour éviter une sur-cuisson due à l'inertie thermique de la plaque de cuisson..

Un utilisateur désireux de manger un aliment suivant un niveau de cuisson souhaité devra estimer chacune de ces étapes, notamment les durées de cuisson de chacune des deux faces de l'aliment et donc le moment de retournement de l'aliment sur la plaque de cuisson.

Il est connu que le niveau de cuisson, pour un type d'aliment donné, est directement lié à l'atteinte d'une température de cuisson à coeur déterminé de l'aliment, c'est-à-dire à la température entre les deux faces à cuire de l'aliment. Par exemple, dans le cas d'une entrecôte de boeuf, quelle que soit l'épaisseur de l'aliment, une température de cuisson à coeur de 31 °C correspond à un niveau de cuisson peu cuit, tandis qu'une température à coeur de 75°C correspond à un niveau de cuisson bien cuit.

Bien entendu, les temps de cuisson pour atteindre ces températures à coeur pour un type d'aliment donné, seront différents selon l'épaisseur de l'aliment ou encore son état initial.

Partant de ce constat, et afin d'aider l'utilisateur dans la cuisson d'un aliment, il est connu d'utiliser une sonde de température intégrée ou non à l'appareil de cuisson. La sonde de température est insérée jusqu'au centre de l'aliment de sorte à mesurer la température de cuisson à coeur de l'aliment. La température de cuisson à coeur de l'aliment est transmise à l'utilisateur via une interface placée directement sur la sonde ou bien par le biais d'une application sur smartphone par exemple. La mesure réelle de la température de cuisson à coeur permet d'indiquer un moment où l'aliment doit être retourné, ou retiré, il s'agit du moment de retournement et du moment de retrait.

Une telle solution permet de suivre précisément le niveau de cuisson de l'aliment mais nécessite l'utilisation d'une sonde de température qui doit être correctement positionnée au centre de l'aliment entre la face inférieure et la face supérieure, au bon endroit dans l'aliment, nettoyée, rangée, et qui peut être défectueuse ou perdue.

Par ailleurs, le fait même que la sonde de température doive être insérée dans les aliments peut rebuter certains utilisateurs.

L'invention a pour but d'aider l'utilisateur à obtenir le niveau de cuisson souhaité pour un type d'aliment déterminé devant être cuit sur un appareil de cuisson présentant un mode de cuisson utilisant une seule plaque de cuisson, et notamment de lui indiquer le moment de retournement et de retrait de l'aliment à cuire sans utiliser de sonde de température en fonction de l'épaisseur et éventuellement de son état initial.

L'invention a pour objet un procédé de cuisson d'un aliment pour un appareil de cuisson présentant un mode de cuisson utilisant une seule plaque de cuisson pour chauffer par contact l'aliment, le procédé comprenant :

- Une étape de caractérisation dans laquelle un type de l'aliment à cuire est déterminé ;
- Une étape de dimensionnement dans laquelle une épaisseur de l'aliment à cuire est déterminée ;

caractérisé en ce que le procédé comprend une étape de détermination dans laquelle un moment de retournement pour obtenir au moins un niveau de cuisson (N) parmi une pluralité de niveaux de cuisson consécutifs est déterminé au moyen d'un algorithme de cuisson prédéterminé recevant en entrée au moins le type, et l'épaisseur de l'aliment à cuire, et en ce que le moment de retournement pour obtenir l'au moins un niveau de cuisson parmi la pluralité de niveaux de cuisson consécutifs est indiqué à un utilisateur de l'appareil de cuisson.

Le procédé selon l'invention est conçu pour fonctionner avec un appareil de cuisson présentant un mode de cuisson utilisant une seule plaque cuisson comme par exemple un barbecue électrique ou une plancha. La plaque de cuisson peut être plane comme sur une plancha ou avec des nervures comme dans un BBQ.

L'appareil de cuisson est dépourvu de sonde de température dédiée à la mesure de la température de l'aliment à coeur.

Lors d'une phase de cuisson, la plaque de cuisson est chauffée à une température de consigne de cuisson de sorte que la cuisson de l'aliment à cuire est réalisée par contact d'une première face de l'aliment à cuire avec la plaque de cuisson. Une action de retournement consiste à retirer la première face de l'aliment à cuire de manière à ce que cette première face de l'aliment à cuire ne soit plus au contact de la plaque de cuisson et à positionner une deuxième face de l'aliment à cuire au contact de la plaque de cuisson. Préférentiellement, la deuxième face est opposée à la première face de sorte qu'elles sont espacées d'une valeur correspondante à l'épaisseur de l'aliment à cuire.

Selon un aspect de l'invention, la plaque de cuisson est dans un matériau à forte inertie thermique, par exemple en fonte.

Cette disposition permet de s'affranchir de considérer la baisse de température de la plaque de cuisson pour le calcul des temps de cuisson, lorsque des aliments sont amenés au contact de la plaque de cuisson. Cette baisse de température est généralement provoquée par la charge de l'aliment dans l'appareil de cuisson ou de la surface occupée par l'aliment sur la plaque de cuisson. La contribution de cette charge dans l'algorithme de cuisson prédéterminé est d'autant plus importante que le matériau de la plaque de cuisson présente une faible inertie thermique L'appareil de cuisson comprend une mémoire pour stocker l'algorithme de cuisson, un système de contrôle conçu pour mettre en oeuvre l'algorithme de cuisson et des moyens de traitement agencés pour recevoir au moins un type et une épaisseur de l'aliment à cuire.

Une partie du procédé selon l'invention peut être réalisé par un dispositif externe à l'appareil de cuisson, comme un smartphone, ou bien toutes les étapes du procédé peuvent être réalisées par l'appareil de cuisson.

L'étape de caractérisation permet de déterminer le type de l'aliment à cuire. Cette étape peut être réalisée automatiquement. Dans ce cas, l'étape de caractérisation met en oeuvre un procédé de reconnaissance d'images par exemple. Cette étape peut également être réalisée par un utilisateur qui indique manuellement le type d'aliment, ou au moyen d'une sélection dans une liste du type de l'aliment à cuire. Le moyen de traitement recevant le type de l'aliment à cuire reçoit l'information de type d'aliment à cuire d'un dispositif de type qui est intégré ou déporté à l'appareil de cuisson.

L'étape de dimensionnement permet de déterminer l'épaisseur de l'aliment à cuire. Le moyen de traitement recevant l'épaisseur de l'aliment à cuire reçoit l'information d'épaisseur d'un dispositif d'épaisseur qui est intégré ou déporté à l'appareil de cuisson. Ledit dispositif d'épaisseur peut comprendre un moyen de mesure qui serait intégré à l'appareil de cuisson comme par exemple celui décrit dans la demande de brevet FR2013564, un accessoire comme la pince décrite dans la demande de brevet FR2102570, ou indiquée manuellement par un utilisateur.

Le procédé permet de déterminer automatiquement à partir des informations de type, et d'épaisseur de l'aliment à cuire, le moment de retournement pour obtenir un niveau de cuisson parmi une pluralité de niveaux de cuisson consécutifs. Le niveau de cuisson obtenu parmi la pluralité de niveaux de cuisson consécutifs est le niveau de cuisson de l'aliment à cuire obtenu en fin de cuisson si l'utilisateur respecte notamment le moment de retournement. Autrement dit, à chaque niveau de cuisson correspond un moment de retournement différent de l'aliment à cuire.

Le procédé réalise une estimation du moment de retournement pour obtenir un niveau de cuisson déterminé. L'estimation est donc réalisée avant un début de cuisson. L'estimation est réalisée par un algorithme de cuisson sans utilisation de la lecture d'une donnée de température de cuisson à coeur de l'aliment lors de la cuisson. Autrement dit, l'estimation ne nécessite pas une utilisation d'une sonde de température mesurant en temps réel la température de l'aliment à coeur.

Ainsi, l'invention permet un accompagnement personnalisé de l'utilisateur pour lui indiquer d'effectuer une action de retournement au moment de retournement approprié afin que celui-ci obtienne en fin de cuisson de l'aliment le niveau de cuisson le plus proche du niveau de cuisson souhaité. L'indication du moment de retournement peut être réalisée par un dispositif d'indication qui est intégré ou déporté de l'appareil de cuisson. Ledit dispositif d'indication comprend une interface sonore, lumineuse ou haptique.

L'invention peut également présenter une ou plusieurs des caractéristiques suivantes prises seules ou en combinaison.

Selon un mode de réalisation, l'étape de détermination détermine et indique un premier moment de retournement pour obtenir un premier niveau de cuisson parmi une pluralité de niveaux de cuisson consécutifs et, si l'utilisateur ne retourne pas l'aliment, alors l'étape de détermination indique au moins un deuxième moment de retournement pour obtenir un deuxième niveau de cuisson consécutif au premier niveau de cuisson, et ainsi de suite jusqu'au dernier niveau de cuisson de la pluralité de niveaux de cuisson consécutifs.

Dans un mode de réalisation, le niveau de cuisson que souhaite l'utilisateur n'est pas connu de l'appareil de cuisson. Ainsi, l'appareil de cuisson détermine une pluralité de moments de retournement associée à une pluralité de niveaux de cuisson consécutifs. L'appareil de cuisson indique chaque moment de retournement à l'utilisateur jusqu'à ce que ce dernier effectue l'action de retournement de l'aliment. La réalisation de l'action de retournement est détectée automatiquement par l'appareil de cuisson, ou de manière alternative, indiquée par l'utilisateur à l'appareil de cuisson.

Selon un mode de réalisation, le procédé comprend en outre une étape de sélection dans laquelle un niveau de cuisson souhaité de l'aliment à cuire est indiqué par l'utilisateur et en ce que l'étape de détermination détermine le moment de retournement pour obtenir le niveau de cuisson souhaité au moyen de l'algorithme de cuisson prédéterminé recevant en plus le niveau de cuisson souhaité de l'aliment à cuire.

Selon un mode de réalisation, le procédé comprend une étape de sélection permettant à l'utilisateur d'indiquer, par exemple par sélection, le niveau de cuisson qu'il souhaite. La sélection peut être réalisée sur un dispositif de sélection de niveau de cuisson qui est intégré ou déporté à l'appareil de cuisson. Ledit dispositif de sélection de niveau de cuisson comprend une interface permettant à un utilisateur d'indiquer manuellement l'information par exemple au moyen d'une sélection dans une liste du niveau de cuisson de l'aliment à cuire. Dans ce cas, l'étape de détermination détermine le moment de retournement pour obtenir le niveau de cuisson souhaité. L'appareil de cuisson indique donc un seul moment de retournement. L'algorithme de cuisson prédéterminé reçoit alors en entrée au moins le type, l'épaisseur et le niveau de cuisson souhaité de l'aliment à cuire.

Selon un mode de réalisation, le moment de retournement est déduit d'une température de retournement, ladite température de retournement étant calculée en fonction d'une température initiale de l'aliment à cuire et d'une température de cuisson à coeur finale de l'aliment à cuire. L'invention utilise le principe selon lequel le niveau de cuisson obtenu, pour un type d'aliment donné, est directement lié à l'atteinte d'une température de cuisson à coeur finale de l'aliment. Ainsi, il est possible de suivre le niveau de cuisson de l'aliment en déterminant une température de cuisson à coeur. Il est donc possible de déterminer d'une part un moment de retrait à partir de la température de cuisson à coeur finale, et d'autre part le moment de retournement à partir de la température de retournement.

L'algorithme de cuisson dépend également de l'état initial de l'aliment, frais ou surgelé. En effet, l'algorithme de cuisson peut différer si l'aliment est frais ou surgelé, même si cet algorithme intègre la température initiale de l'aliment ; Il peut donc y avoir plusieurs algorithme de cuisson déterminés stockés dans la mémoire de l'appareil de cuisson, un algorithme en particulier pouvant être utilisé en fonction d'un état initial de l'aliment ou bien d'un état final désiré de l'aspect final de l'aliment, par exemple son marquage.

La température de cuisson à coeur finale est déduite du niveau de cuisson et du type de l'aliment à cuire.

Selon un mode de réalisation, lequel la température de retournement est égale à :

[Math 1]

$$T_{retournement} = T_{initiale} + \frac{(T_{finale} - T_{initiale})}{f(A)}$$

où $T_{retournement}$ correspond à la température de retournement, $T_{initiale}$ correspond à la température initiale de l'aliment à cuire, $T_{finale}$ correspond à la température de cuisson à coeur finale de l'aliment à cuire, et f(A) correspond à une valeur dépendant du type d'aliment.

Selon un mode de réalisation, f(A) est égal à 2.

Ainsi, le procédé selon l'invention calcule la température de retournement de sorte qu'elle soit égale à la somme de la température initiale et de la moitié de l'élévation de la température de cuisson depuis une température initiale vers une température à coeur finale de l'aliment à cuire. Par conséquent, la première face et la deuxième face de l'aliment à cuire restent chacune en contact avec la plaque de cuisson pendant une durée différente.

Selon un mode de réalisation, la température initiale est choisie égale à 4-5°C.

Cette température initiale correspond à une température habituelle de stockage de l'aliment au frais dans un réfrigérateur.

Selon un mode de réalisation, lequel l'algorithme de cuisson prédéterminé est déduit d'une analyse des données d'un plan d'expérience dans lequel un temps d'atteinte d'une température de cuisson à coeur de l'aliment à cuire est relevé, définissant ainsi un moment de retournement pour la cuisson d'une première face de l'aliment à cuire et une durée de cuisson après retournement pour la cuisson d'une deuxième face de l'aliment à cuire, pour un type et une épaisseur de l'aliment à cuire donné, et éventuellement un état initial de l'aliment à cuire. L'étape de détermination définit l'algorithme de cuisson au moyen d'une analyse de données issues d'un plan d'expérience correspondant à une pluralité d'essais empiriques propre à chaque type d'aliment à cuire. Autrement dit, l'algorithme de cuisson détermine une loi statistique qui résout au mieux des constats de température de cuisson à coeur réalisés lors des plans d'expériences. Lors des plans d'expérience, un temps d'atteinte d'une température de cuisson à coeur de l'aliment à cuire est relevée en fonction d'un type et d'une épaisseur de l'aliment à cuire donné, et éventuellement d'un état initial de l'aliment à cuire.

Selon un mode de réalisation, l'algorithme de cuisson prédéterminé comprend un polynôme d'ordre 2, ayant en paramètre l'au moins un niveau de cuisson parmi une pluralité de niveaux de cuisson consécutifs et l'épaisseur de l'aliment à cuire.

Ainsi l'algorithme de cuisson peut être représenté sous la forme d'un graphique tridimensionnel ayant en paramètre le niveau de cuisson parmi une pluralité de niveaux de cuisson consécutifs, c'est-à-dire la température de cuisson à coeur finale, et l'épaisseur de l'aliment à cuire.

Selon un mode de réalisation, l'algorithme de cuisson prédéterminé comprend un polynôme d'ordre 2, ayant en paramètre l'épaisseur de l'aliment à cuire.

Ainsi l'algorithme de cuisson est plus précis pour chaque niveau de cuisson.

Selon un mode de réalisation, l'étape de caractérisation détermine également une température de préchauffage de la plaque de cuisson, et une température de consigne de cuisson.

Ainsi le procédé détermine une température de préchauffage de la plaque de cuisson à appliquer lors d'une phase de préchauffage. La température de préchauffage peut varier en fonction du type d'aliment. La température de préchauffage est stockée dans la mémoire de l'appareil de cuisson. La phase de préchauffage est réalisée avant une installation de l'aliment à cuire sur la plaque de cuisson.

Cette température de préchauffage définie en outre la température de consigne de cuisson du type d'aliment sélectionné.

Selon un mode de réalisation, l'étape de détermination détermine également un moment de retrait de l'aliment.

Le procédé indique également le moment de retrait correspondant au moment où la deuxième face de l'aliment à cuire a terminé de cuire de sorte à obtenir le niveau de cuisson souhaité, et que l'aliment peut être retiré de la plaque de cuisson.

Le procédé indique à l'utilisateur chaque moment où une action sur l'aliment à cuire peut ou doit être réalisée.

L'invention porte également sur un appareil de cuisson pour la mise en oeuvre d'un procédé selon l'invention, ledit appareil de cuisson comprenant :

- un mode de cuisson utilisant une seule plaque de cuisson apte à recevoir au moins un aliment à cuire,
- une mémoire pour stocker l'algorithme de cuisson,
- des moyens de traitement agencés pour recevoir au moins un type, et une épaisseur de l'aliment à cuire et agencé pour exécuter le procédé selon l'invention.

L'invention sera mieux comprise, grâce à la description ci-après, qui se rapporte à un mode de réalisation selon la présente invention, donné à titre d'exemple non limitatif et expliqué avec référence aux dessins schématiques annexés, dans lesquels :

[FIG. 1] est une représentation schématique d'un appareil de cuisson selon l'invention ;
[FIG. 2] est un graphique représentant le temps d'atteinte d'une température à coeur d'un aliment en fonction d'une épaisseur de l'aliment.

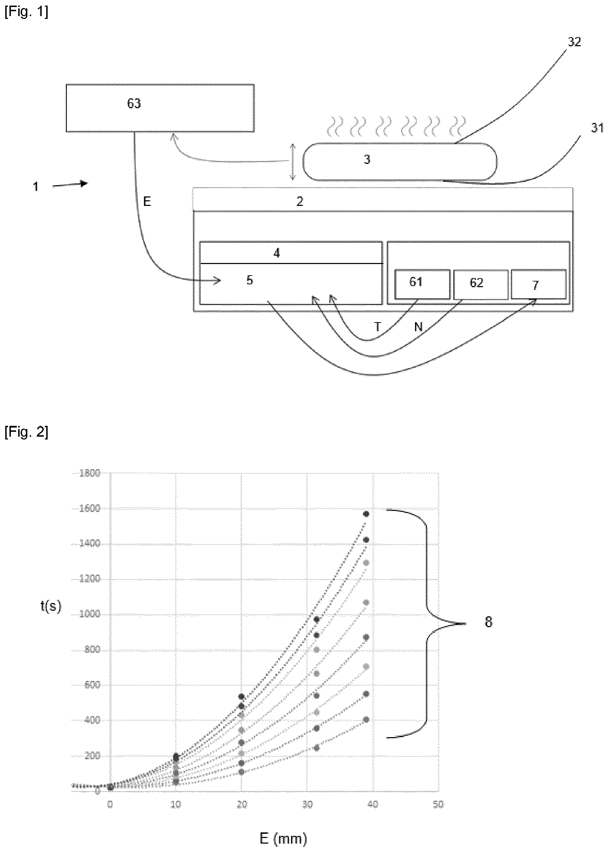

La figure 1 illustre un appareil de cuisson 1 selon l'invention. L'appareil de cuisson 1 présente un mode de cuisson utilisant une seule plaque de cuisson 2 apte à recevoir au moins un aliment 3 et à venir au contact d'une première face 31 de l'aliment à cuire 3. La plaque de cuisson 2 peut être plane comme sur une plancha ou avec des nervures comme dans un BBQ.

L'appareil de cuisson 1 est dépourvu de sonde de température dédiée à la mesure de la température de l'aliment à coeur.

Dans un mode de réalisation, l'appareil de cuisson 1 selon l'invention est électrique. Il comprend ainsi de manière usuelle une alimentation électrique (non illustrée) permettant de raccorder l'appareil de cuisson 1 à un réseau électrique en vue de l'alimenter en énergie. Il comporte également un élément chauffant électrique tel qu'un élément résistif chauffant apte à chauffer la plaque de cuisson. Par ailleurs, l'appareil de cuisson 1 comprend un commutateur électrique (non illustré) apte à autoriser ou à interrompre l'alimentation électrique de l'élément chauffant électrique. Typiquement, de tels commutateurs électriques sont par exemple des relais électriques de puissance.

L'appareil de cuisson 1 comprend une mémoire 4 pour stocker notamment un algorithme de cuisson, au moins une température de préchauffage à appliquer au cours d'une phase de préchauffage, au moins une température de consigne de cuisson à appliquer au cours d'une phase de cuisson, un système de contrôle 5 conçu pour mettre en oeuvre l'algorithme de cuisson et des moyens de traitement 61, 62, 63 agencés pour recevoir au moins un type T et une épaisseur E de l'aliment à cuire 3.

Le moyen de traitement 63 recevant l'épaisseur E de l'aliment à cuire 3 reçoit l'information d'épaisseur E d'un dispositif d'épaisseur qui est intégré ou déporté à l'appareil de cuisson 1. Ledit dispositif d'épaisseur peut comprendre un moyen de mesure de l'épaisseur de l'aliment à cuire 3 comme par exemple celui décrit dans la demande de brevet FR2013564, ou un accessoire comme la pince décrite dans la demande de brevet FR2102570, ou une interface permettant à un utilisateur d'indiquer manuellement l'information.

Le moyen de traitement 61 recevant le type T de l'aliment à cuire 3 reçoit l'information du type T d'aliment à cuire 3 d'un dispositif de type qui est intégré ou déporté à l'appareil de cuisson. Ledit dispositif de type peut mettre en oeuvre un procédé de reconnaissance d'images par exemple ou comprendre une interface permettant à un utilisateur d'indiquer manuellement l'information par exemple au moyen d'une sélection dans une liste du type de l'aliment à cuire.

Selon un mode de réalisation, l'appareil de cuisson 1 comprend également un moyen de traitement 62 recevant un niveau de cuisson souhaité N de l'aliment à cuire 3. Le niveau de cuisson souhaité N est le niveau de cuisson de l'aliment à cuire 3 obtenu en fin de cuisson que souhaite un utilisateur. Le moyen de traitement 62 recevant le niveau de cuisson souhaité N de l'aliment à cuire 3 reçoit l'information de niveau de cuisson souhaité N d'un dispositif de sélection de niveau de cuisson souhaité qui est intégré ou déporté de l'appareil de cuisson 1. Ledit dispositif de sélection de niveau de cuisson souhaité N comprend une interface permettant à un utilisateur d'indiquer manuellement l'information par exemple au moyen d'une sélection dans une liste du niveau de cuisson souhaité de l'aliment à cuire.

L'appareil de cuisson 1 comprend enfin un dispositif d'indication 7 qui est intégré ou déporté de l'appareil de cuisson. Ledit dispositif d'indication 7 comprend une interface sonore, lumineuse ou haptique telle que vibrante.

Le système de contrôle 5 de l'appareil de cuisson 1 reçoit des informations des moyens de traitement 61, 62, 63, puis met en oeuvre le procédé selon l'invention de sorte à déterminer au moins un moment de retournement pour obtenir le niveau de cuisson parmi une pluralité de niveaux de cuisson consécutifs. L'au moins un moment de retournement pour obtenir le niveau de cuisson parmi une pluralité de niveaux de cuisson consécutifs est indiqué à l'utilisateur par le dispositif d'indication 7. De manière optionnelle, le procédé indique également un moment de retrait correspondant au moment où la deuxième face 32 de l'aliment à cuire 3 a terminé de cuire de sorte à obtenir le niveau de cuisson choisi, et que l'aliment peut être retiré de la plaque de cuisson 2.

Plus précisément, le procédé selon l'invention met en oeuvre une étape de caractérisation dans laquelle le type T de l'aliment à cuire 3 est déterminé. L'étape de caractérisation met en oeuvre le moyen de traitement 61 recevant le type T de l'aliment à cuire 3. L'information du type T d'aliment à cuire 3 est transmis au système de contrôle 5 de l'appareil de cuisson 1.

Le procédé selon l'invention met en oeuvre une étape de dimensionnement dans laquelle l'épaisseur E de l'aliment à cuire 3 est déterminée. L'étape de dimensionnement met en oeuvre le moyen de traitement 63 recevant l'épaisseur E de l'aliment à cuire 3. L'information d'épaisseur E de l'aliment à cuire 3 est transmis au système de contrôle 5 de l'appareil de cuisson 1.

De manière optionnelle, le procédé selon l'invention met en oeuvre une étape de sélection dans laquelle le niveau de cuisson souhaité N de l'aliment à cuire est déterminé. L'étape de sélection met en oeuvre le moyen de traitement 62 recevant niveau de cuisson souhaité N de l'aliment à cuire 3. L'information de niveau de cuisson souhaité N de l'aliment à cuire 3 est transmis au système de contrôle 5 de l'appareil de cuisson 1.

L'appareil de cuisson 1 selon l'invention opère selon deux phases de fonctionnement : une phase de préchauffage dans laquelle la plaque de cuisson est chauffée à une température de préchauffage sans les aliments à cuire, et une phase de cuisson au cours de laquelle les aliments à cuire 3 sont disposés sur la plaque de cuisson 2 et cuisent, la plaque de cuisson 2 étant maintenue à une température de consigne de cuisson.

Le procédé selon l'invention met en oeuvre une étape de détermination durant laquelle le moment de retournement pour obtenir un niveau de cuisson parmi une pluralité de niveaux de cuisson consécutifs est déterminé au moyen d'un algorithme de cuisson prédéterminé recevant en entrée au moins le type T, et l'épaisseur E de l'aliment à cuire 3.

Lors de la phase de cuisson, la plaque de cuisson 2 est chauffée à la température de consigne de cuisson de sorte que la cuisson de l'aliment à cuire 3 est réalisée par contact de la première face 31 de l'aliment à cuire 3 avec la plaque de cuisson 2. Une action de retournement consiste à retirer la première face 31 de l'aliment à cuire 3 de manière à ce que cette première face 31 de l'aliment à cuire 3 ne soit plus au contact de la plaque de cuisson 2 et à positionner une deuxième face 32 de l'aliment à cuire 3 au contact de la plaque de cuisson 2. Préférentiellement, la deuxième face 32 est opposée à la première face 31 de sorte qu'elles sont espacées d'une valeur correspondante à l'épaisseur E de l'aliment à cuire 3.

Le système de contrôle 5 réalise, au moyen de l'algorithme de cuisson, une estimation du moment de retournement pour obtenir un niveau de cuisson parmi une pluralité de niveaux de cuisson consécutifs sans utilisation de la lecture d'une donnée de température de cuisson à coeur de l'aliment à cuire 3 lors de la cuisson. Autrement dit, l'estimation ne nécessite pas une utilisation d'une sonde de température indiquant en temps réel la température de cuisson à coeur $T_c$ de l'aliment à cuire 3.

L'invention permet un accompagnement personnalisé de l'utilisateur pour lui indiquer d'effectuer l'action de retournement au moment de retournement approprié afin que celui-ci obtienne en fin de cuisson de l'aliment à cuire 3 le niveau de cuisson le plus proche du niveau de cuisson souhaité.

Selon un premier mode de réalisation, le niveau de cuisson que souhaite l'utilisateur n'est pas connu de l'appareil de cuisson 1 avant le début de la cuisson. Ainsi, l'appareil de cuisson 1 détermine une pluralité de moments de retournement associée à une pluralité de niveaux de cuisson consécutifs. Plus précisément, lequel l'étape de détermination détermine un premier moment de retournement pour obtenir un premier niveau de cuisson parmi la pluralité de niveaux de cuisson consécutifs et au moins un deuxième moment de retournement pour obtenir un deuxième niveau de cuisson consécutif au premier niveau de cuisson.

Dans ce mode de réalisation, l'appareil de cuisson 1 indique chaque moment de retournement au moyen du dispositif d'indication 7 à l'utilisateur jusqu'à ce que ce dernier effectue l'action de retournement de l'aliment à cuire 3. La réalisation de l'action de retournement est détectée automatiquement par l'appareil de cuisson 1, ou de manière alternative, indiquée par l'utilisateur à l'appareil de cuisson 1.

Dans un second mode de réalisation, l'utilisateur indique le niveau de cuisson souhaité N qu'il souhaite lors de l'étape de sélection. Dans ce cas, l'étape de détermination détermine le moment de retournement pour obtenir le niveau de cuisson souhaité N indiqué. L'appareil de cuisson 1 indique donc un seul moment de retournement. L'algorithme de cuisson prédéterminé reçoit alors en entrée au moins le type T, l'épaisseur E et le niveau de cuisson souhaité N de l'aliment à cuire 3.

Quel que soit le mode de réalisation, le moment de retournement est déduit d'une température de retournement, ladite température de retournement étant calculée en fonction d'une température initiale de l'aliment à cuire 3 et d'une température de cuisson à coeur finale de l'aliment à cuire 3. En effet, L'invention utilise le principe connu selon lequel le niveau de cuisson, pour un type T d'aliment donné, est directement lié à l'atteinte d'une température de cuisson à coeur finale de l'aliment. Ainsi, il est possible de suivre le niveau de cuisson de l'aliment en déterminant la température de cuisson à coeur $T_c$. Il est donc possible de déterminer d'une part un moment de retrait à partir de la température de cuisson à coeur final, et d'autre part le moment de retournement à partir de la température de retournement.

Selon un mode de réalisation, la température de retournement est égale à :

[Math 2]

$$T_{retournement} = T_{initiale} + \frac{(T_{finale} - T_{initiale})}{f(A)}$$

où $T_{retournement}$ correspond à la température de retournement, $T_{initiale}$ correspond à la température initiale de l'aliment à cuire, $T_{finale}$ correspond à la température de cuisson à coeur finale de l'aliment à cuire 3, et f(A) correspond à une valeur dépendant du type d'aliment.

Ainsi, le procédé selon l'invention calcule la température de retournement de sorte qu'elle soit égale à la somme de la température initiale et de la moitié de l'élévation de la température de cuisson depuis une température initiale vers une température à coeur finale de l'aliment à cuire 3. Par conséquent, la première face 31 et la deuxième faces 32 de l'aliment à cuire 3 restent chacune en contact avec la plaque de cuisson 2 pendant une durée différente.

La détermination du temps de retournement à partir de la température de retournement est réalisée par l'algorithme de cuisson au moyen d'une analyse de données issues d'un plan d'expérience correspondant à une pluralité d'essais empiriques propre à chaque type d'aliment à cuire. Autrement dit, l'algorithme de cuisson détermine une loi statistique qui résout au mieux des constats de température de cuisson à coeur $T_c$ réalisés lors des plans d'expériences. Lors des plans d'expériences, un temps d'atteinte d'une température de cuisson à coeur $T_c$ de l'aliment est relevée en fonction d'un type T et d'une épaisseur E de l'aliment à cuire 3 donné, et éventuellement d'un état initial de l'aliment à cuire 3. Les plans d'expériences peuvent être illustrés sur un graphique, telle que la figure 2,Sur ce graphe, on connait pour les différentes températures à coeur T illustrées par les courbes 8, le temps nécessaire de cuisson en fonction de l'épaisseur E de l'aliment considéré. L'algorithme de cuisson prédéterminé comprend alors un polynôme d'ordre 2, ayant en paramètre l'épaisseur de l'aliment à cuire.

De manière alternative, l'algorithme de cuisson peut être représenté sous la forme d'un graphique tridimensionnel ayant en paramètre le niveau de cuisson, c'est-à-dire la température de cuisson à coeur finale, et l'épaisseur de l'aliment à cuire. Dans ce cas, l'algorithme de cuisson prédéterminé comprend un polynôme d'ordre 2, ayant en paramètre le niveau de cuisson et l'épaisseur de l'aliment à cuire.

De manière optionnelle, l'étape de caractérisation détermine également la température de préchauffage et donc la température de consigne de cuisson qui dans l'exemple est identique à la température de préchauffage. La température de préchauffage peut varier en fonction du type T de l'aliment à cuire 3.

Ainsi, l'appareil de cuisson selon l'invention peut fonctionner selon plusieurs scénarios d'usage dont un premier est décrit ci-dessous.

L'appareil de cuisson 1 est allumé par l'utilisateur et il sélectionne le type de l'aliment à cuire 3. A partir de cette information, l'appareil de cuisson 1 préchauffe la plaque de cuisson 2 à une température de préchauffage déterminée lors d'une étape de caractérisation. Lorsque la température de préchauffage est atteinte, l'appareil de cuisson 1 indique via le dispositif d'indication que l'aliment à cuire peut-être positionné sur la plaque de cuisson. L'appareil de cuisson 1 détermine alors automatiquement l'épaisseur de l'aliment à cuire et la transmet au système de contrôle 5. L'algorithme de cuisson détermine alors différents moments de retournement correspondant à différents niveaux de cuisson consécutifs. Le dispositif d'indication indique à l'utilisateur chaque moment de retournement. Lorsque l'utilisateur réalise le retournement de l'aliment, le dispositif de cuisson le détecte et en déduit le niveau de cuisson souhaité ainsi que le moment de retrait de l'aliment à cuire. Le dispositif d'indication indique à l'utilisateur le moment de retrait de l'aliment.

Un deuxième scénario d'usage est décrit ci-dessous.

L'appareil de cuisson 1 est allumé par l'utilisateur et il sélectionne le type de l'aliment à cuire 3 ainsi que le niveau de cuisson souhaité. A partir de ces informations, l'appareil de cuisson 1 préchauffe la plaque de cuisson 2 à une température de préchauffage déterminée lors d'une étape de caractérisation. Lorsque la température de préchauffage est atteinte, l'appareil de cuisson 1 indique via le dispositif d'indication que l'aliment à cuire peut-être positionné sur la plaque de cuisson 2. L'appareil de cuisson 1 détermine alors automatiquement l'épaisseur de l'aliment à cuire et la transmet au système de contrôle 5. L'algorithme de cuisson détermine alors le moment de retournement correspondant au niveau de cuisson souhaité indiqué par l'utilisateur. Lorsque l'utilisateur réalise le retournement de l'aliment, le dispositif de cuisson 1 détermine le moment de retrait de l'aliment. Le dispositif d'indication indique à l'utilisateur le moment de retrait de l'aliment.

Lorsque l'utilisateur souhaite utiliser l'appareil de cuisson 1 pour cuire plusieurs aliments, l'utilisateur indique également s'il souhaite insérer tous les aliments en même temps. Dans ce cas, il les retournera et les sortira à différents moments correspondant aux différents niveaux de cuisson finaux souhaités. De manière alternative, l'utilisateur peut indiquer qu'il souhaite retourner tous les aliments en même temps. Dans ce cas, il les insérera et les sortira à différents moments correspondant aux niveaux de cuisson finaux souhaités. Enfin si l'utilisateur indique qu'il souhaite sortir tous les aliments en même temps, il les insérera et les retournera à différents moments correspondant aux niveaux de cuisson finaux souhaités.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention.

## Revendications

1. Procédé de cuisson d'un aliment (3) pour un appareil de cuisson (1) présentant un mode de cuisson utilisant une seule plaque de cuisson (2) pour chauffer par contact l'aliment (3), le procédé comprenant :

   - Une étape de caractérisation dans laquelle un type (T) de l'aliment à cuire (3) est déterminé;
   - Une étape de dimensionnement dans laquelle une épaisseur (E) de l'aliment à cuire (3) est déterminée ;

   **caractérisé en ce que** le procédé comprend une étape de détermination dans laquelle un moment de retournement pour obtenir au moins un niveau de cuisson parmi une pluralité de niveaux de cuisson consécutifs est déterminé au moyen d'un algorithme de cuisson prédéterminé recevant en entrée au moins le type (T), et l'épaisseur (E) de l'aliment à cuire, et **en ce que** le moment de retournement pour obtenir l'au moins un niveau de cuisson parmi la pluralité de niveaux de cuisson consécutifs est indiqué à un utilisateur de l'appareil de cuisson (1).

2. Procédé selon la revendication 1, dans lequel l'étape de détermination détermine et indique un premier moment de retournement pour obtenir un premier niveau de cuisson parmi une pluralité de niveaux de cuisson consécutifs et, si l'utilisateur ne retourne pas l'aliment, alors l'étape de détermination indique au moins un deuxième moment de retournement pour obtenir un deuxième niveau de cuisson consécutif au premier niveau de cuisson, et ainsi de suite jusqu'au dernier niveau de cuisson de la pluralité de niveaux de cuisson consécutifs.

3. Procédé selon la revendication 1, comprenant en outre une étape de sélection dans laquelle un niveau de cuisson souhaité (N) de l'aliment à cuire est indiqué par l'utilisateur et en ce que l'étape de détermination détermine le moment de retournement pour obtenir le niveau de cuisson souhaité (N) au moyen de l'algorithme de cuisson prédéterminé recevant en plus le niveau de cuisson souhaité (N) de l'aliment à cuire (3).

4. Procédé selon l'une quelconque des revendications précédentes, dans lequel le moment de retournement est déduit d'une température de retournement, ladite température de retournement étant calculée en fonction d'une température initiale de l'aliment à cuire (3) et d'une température de cuisson à coeur finale de l'aliment à cuire.

5. Procédé selon la revendication 4, dans lequel la température de retournement est égale à :

[Math 3]

$$T_{retournement} = T_{initiale} + \frac{(T_{finale} - T_{initiale})}{f(A)}$$

où $T_{retournement}$ correspond à la température de retournement, $T_{initiale}$ correspond à la température initiale de l'aliment à cuire, $T_{finale}$ correspond à la température de cuisson à coeur finale de l'aliment à cuire et f(A) correspond à une valeur dépendant du type d'aliment.

6. Procédé selon l'une quelconque des revendications précédentes, dans lequel l'algorithme de cuisson prédéterminé est déduit d'une analyse des données d'un plan d'expérience dans lequel un temps d'atteinte d'une température de cuisson à coeur (Tc) de l'aliment à cuire (3) est relevé, définissant ainsi un moment de retournement pour la cuisson d'une première face (31) de l'aliment à cuire (3) et une durée de cuisson après retournement pour la cuisson d'une deuxième face (32) de l'aliment à cuire (3), pour un type (T) et une épaisseur (E) de l'aliment à cuire (3) donné, et éventuellement un état initial de l'aliment à cuire (3).

7. Procédé selon la revendication 6, dans lequel l'algorithme de cuisson prédéterminé comprend un polynôme d'ordre 2, ayant en paramètre l'au moins un niveau de cuisson parmi une pluralité de niveaux de cuisson consécutifs et l'épaisseur de l'aliment à cuire (3).

8. Procédé selon la revendication 6, dans lequel l'algorithme de cuisson prédéterminé comprend un polynôme d'ordre 2, ayant en paramètre l'épaisseur de l'aliment à cuire (3).

9. Procédé selon l'une quelconque des revendications précédentes, dans lequel l'étape de caractérisation détermine également une température de préchauffage de la plaque de cuisson (2), et une température de consigne de cuisson.

10. Procédé selon l'une quelconque des revendications précédentes, dans lequel l'étape de détermination détermine également un moment de retrait de l'aliment.

11. Appareil de cuisson (1) pour la mise en oeuvre d'un procédé selon l'une des revendications 1 à 10, ledit appareil de cuisson (1) comprenant :

   - un mode de cuisson utilisant une seule plaque de cuisson (2) apte à recevoir au moins un aliment à cuire (3),
   - une mémoire (4) pour stocker l'algorithme de cuisson,
   - des moyens de traitement (61, 62, 63) agencés pour recevoir au moins un type (T), et une épaisseur (E) de l'aliment à cuire (3) et agencé pour exécuter le procédé selon l'une des revendications 1 à 10.

[Fig. 1]

[Fig. 2]

Europäisches
Patentamt

European
Patent Office

Office européen
des brevets

## RAPPORT DE RECHERCHE EUROPEENNE

Numéro de la demande

**EP 23 16 6374**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2019/057282 A1 (LEE JIN HEE [KR]) 21 février 2019 (2019-02-21) * alinéas [0037] - [0043], [0056] - [0058]; figures * ----- | 1,3,6-11 | INV. A47J36/32 |
| Y | US 2018/267683 A1 (TESSIER PHILIP [US] ET AL) 20 septembre 2018 (2018-09-20) * alinéa [0097] * * alinéas [0096], [0101]; figures * ----- | 1,3,6-11 | |
| A | US 2020/121125 A1 (ZITO DAVID [US] ET AL) 23 avril 2020 (2020-04-23) * alinéas [0076] - [0111] * ----- | 1-11 | |

**DOMAINES TECHNIQUES RECHERCHES (IPC)**

**A47J**

Le présent rapport a été établi pour toutes les revendications

| Lieu de la recherche | Date d'achèvement de la recherche | Examinateur |
|---|---|---|
| Munich | 29 juin 2023 | De Terlizzi, Marino |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

**EP 23 16 6374**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**29-06-2023**

| Document brevet cité au rapport de recherche | Date de publication | Membre(s) de la famille de brevet(s) | | Date de publication |
|---|---|---|---|---|
| US 2019057282 A1 | 21-02-2019 | CN | 109166054 A | 08-01-2019 |
| | | JP | 2019034140 A | 07-03-2019 |
| | | US | 2019057282 A1 | 21-02-2019 |
| | | WO | 2019035587 A1 | 21-02-2019 |
| US 2018267683 A1 | 20-09-2018 | AU | 2018236447 A1 | 10-10-2019 |
| | | CA | 3056767 A1 | 20-09-2018 |
| | | CN | 111149098 A | 12-05-2020 |
| | | EP | 3596610 A1 | 22-01-2020 |
| | | JP | 2020510273 A | 02-04-2020 |
| | | KR | 20200007775 A | 22-01-2020 |
| | | US | 2018267683 A1 | 20-09-2018 |
| | | WO | 2018170455 A1 | 20-09-2018 |
| US 2020121125 A1 | 23-04-2020 | US | 2018345485 A1 | 06-12-2018 |
| | | US | 2020121125 A1 | 23-04-2020 |
| | | US | 2021030199 A1 | 04-02-2021 |
| | | US | 2021291356 A1 | 23-09-2021 |
| | | WO | 2018165038 A1 | 13-09-2018 |
| | | WO | 2018165105 A1 | 13-09-2018 |

EPO FORM P0460

**RÉFÉRENCES CITÉES DANS LA DESCRIPTION**

**Documents brevets cités dans la description**

- FR 2013564

- FR 2102570